# EUROPEAN PATENT APPLICATION

(11) **EP 4 431 893 A1**
(43) Date of publication of application: **18.09.2024**
(21) Application number: 24163922.8
(22) Date of filing: 15.03.2024
(51) Int. Cl.: G01L 1/14

(54) **LOAD CELL**

(30) Priority: 17.03.2023 DK PA202300241
(71) Applicant: EILERSEN, Nils Aage Juul, 2950 Vedbaek (DK)
(72) Inventor: Eilersen, Nils Aage Juul, 2950 Vedbaek (DK)
(74) Representative: Dragsted Partners A/S

(57) **Abstract**

A load cell having a first load receiving end and a second opposing end, and having a central axis extending from the first load receiving end to the second opposing end, the load cell comprising: a first load receiving end comprising a flexible membrane that is adapted to yield upon application of a load to the membrane, the flexible membrane having a first inner surface and a first outer surface, a second opposing end comprising a base providing a counterforce to the load receiving end and/or the flexible membrane, at least one side wall extending from the flexible membrane and to the base, the side wall having a second inner surface and a second outer surface, a sensor carrier being arranged a predefined distance from the flexible membrane and having a first sensor surface facing the first inner surface of the flexible membrane, a first sensor part arranged on the first inner surface of the flexible membrane, a second sensor part arranged on the first sensor surface of the sensor carrier, where in an unloaded condition the first sensor part is arranged a first distance from the second sensor part, and in a loaded condition the first sensor is arranged a second distance from the second sensor part, where the first distance is different from the second distance.

## Description

### Technical Field

A load cell having a first load receiving end and a second opposing end and having a central axis extending from the first load receiving end to the second opposing end.

### Description

Cylindrical capacitive load cells are known where the measuring electrodes, in the form of concentric ring areas are placed on an electrode carrier facing the inner side of the circular measuring membrane, measuring the change of distances between these ring areas on the electrode carrier and the inner side of the membrane when a force is applied to the load cell.

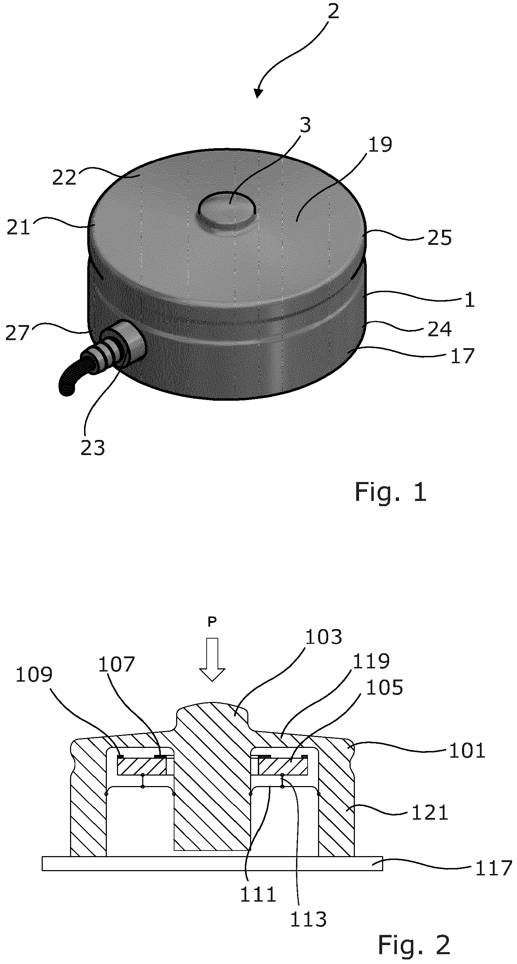

An example of a prior art capacitive load cell is shown in Fig. 2, with a load cell body 101, a force introduction part 103, a capacitive electrode carrier 105, a central ring electrode 107, an outer ring electrode 109, a flexible mounting for the capacitive electrode carrier 105 comprising a spring 111 and a link 113 allowing the central ring electrode 107 and the outer ring electrode 109 to capture changes in distances to the corresponding areas in the load cell body with different signs when the load cell is loaded and where the change in distance will be positive for central ring electrode 107 and negative for outer ring electrode 109. The load cell body 101 comprises a flexible membrane 119, which is connected to a solid side wall 121, which in turn is connected to a base 117. When a force P is applied to the force introduction part 103, the flexible membrane is configured to deform.

With the measuring electrodes in this prior art version of capacitive load cells, covering an area corresponding to most of the measuring membrane, the load cell will be sensitive to an eccentric application of the force to be measured which will tilt the force introducing stud and hereby distort the measuring membrane resulting in changes in the distances between the measuring membrane and the different areas of the capacitive electrodes, with one side of the electrodes having an increased distance and the opposite side having a corresponding smaller distance, which results in a change of the capacitance for each of the electrodes 7 and 9.

This occurs because a capacitance C having an area A, has the non-linear dependency to the distance d between electrodes according to the formula C= εA/d, and it may be seen that the side of the sensor with the decreased distance that will capture a higher change of capacitance than the side with increased distance and hereby the capacitances will increase with a distortion of the membrane. This principle may be applicable to the invention of the present disclosure.

Thus, it may be advantageous to attempt to reduce the effect of an eccentric load on the load cell in order to minimize measurements that result in incorrect or inaccurate readings in the load cell.

In accordance with the invention there is provided a load cell having a first load receiving end and a second opposing end, having a central axis extending from the first load receiving end to the second opposing end, the load cell comprising: a first load receiving end comprising a flexible membrane that is adapted to yield upon application of a load to the membrane, the flexible membrane having a first inner surface and a first outer surface, a second opposing end comprising a base providing a counterforce to the load receiving end and/or the flexible membrane, at least one side wall extending from the flexible membrane to the base, the side wall having a second inner surface and a second outer surface, a sensor carrier being arranged at a predefined distance from the flexible membrane and having a first sensor surface facing the first inner surface of the flexible membrane, a first sensor part arranged on the first inner surface of the flexible membrane, a second sensor part arranged on the first sensor surface of the sensor carrier, where in an unloaded condition the first sensor part is arranged at a first distance from the second sensor part, and in a loaded condition the first sensor is arranged at a second distance from the second sensor part, where the first distance is different from the second distance.

By providing the load cell with a first sensor that is arranged on an inner surface of the flexible membrane, and a second sensor part arranged on a first surface of the sensor carrier, where the first sensor part and the second sensor part are arranged opposite each other, the movement of the first sensor part relative to the second sensor part will result in a change in the capacity between the first sensor part and the second sensor part, where the difference in capacitance may be converted into a measurement of the load applied to the flexible membrane.

The second sensor part is configured to be positioned in a static position, while the first sensor part is configured to move together with the flexible membrane, so that every time the flexible membrane is deformed in a direction along the central axis of the load cell, the first sensor part will move relative to the second sensor part. Thus, when the load cell is in an unloaded condition, the first distance between the first sensor part and the second sensor part may be predefined, while in a loaded condition the first sensor part and the second sensor part are arranged at a second distance, where the second distance is shorter or longer than the first distance.

The load cell may comprise a load cell body, where the load cell body comprises a load receiving end and a second opposing end, where the load cell body may comprise the flexible membrane, the base and the side wall.

The load cell has a rigid side wall, so that any force that is applied to the first end of the load cell is transmitted towards the base without any flexure of the side walls. The side walls are capable of transmitting force in the direction that is parallel to the central axis of the load cell towards the base. By transferring or transmitting the force from the first end to the second end (base), the base can function as a counterforce to the load applied to the first end of the load cell. The side walls may be solid.

The side wall may be an annular side wall, where the side wall defines an outer radial periphery of the load cell. Thus, the annular side wall may extend along the entire outer periphery of the load cell, where the side wall may provide the load cell with a rigid force transmission from the load receiving end to the base.

In one exemplary embodiment, the side wall may extend between the first end and the second end of the load cell. Thus, the side wall may extend from an area where the flexible membrane is attached to the side wall and towards the base. Thus, the load applied to the load cell via the first end and/or the flexible membrane, may be transmitted towards the base of the load cell via the side walls, where the side walls maintain their shape during the application of the load.

In one exemplary embodiment, the load cell may comprise a first inner volume defined by the first inner surface (of the flexible membrane) and the second inner surface (of the side wall). Thus, the sensor parts and any electric circuits may be arranged inside the first inner volume, where the flexible membrane and the side walls may seal off the inner volume of the load cell, in order to prevent moisture and/or contamination to the insides of the load cell, where moisture and contamination may damage the sensor parts or the electric circuits.

In one exemplary embodiment, the sensor carrier is positioned within the volume of the load cell.

In one exemplary embodiment, the sensor carrier has a first outer diameter, where the first outer diameter of the sensor carrier is smaller than a first inner diameter of the second inner surface of the side wall. Thus, when the sensor carrier is positioned in a central position inside the load cell, the outer periphery of the sensor carrier will be arranged at a distance from the second inner wall of the side wall of the load cell. Thus, the sensor carrier may be arranged so that the sensor carrier is not in direct contact with the side wall of the load cell.

In one exemplary embodiment, the load cell may further comprise a third sensor part arranged on the first inner surface of the flexible membrane, and a fourth sensor part arranged on the first sensor surface of the sensor carrier. The third sensor part and the fourth sensor part may operate as a sensor pair being separate from the first sensor part and the second sensor part, so that the third sensor part and the fourth sensor part are configured to measure a flexure of the flexible membrane in a different region than the first sensor part and the second sensor part.

In one exemplary embodiment, the first sensor part and the second sensor part may be arranged in a central position of the load cell. The load cell may be a circular load cell, where the flexible membrane is circular and the side wall extends from the peripheral area of the flexible membrane. The central part of the flexible membrane may be configured to have the largest yield, so that when a force is applied to the flexible membrane, the central part of the flexible membrane is configured to move the largest distance. Thus, by providing the first sensor part in a central area of the flexible membrane and having the second sensor part in a corresponding central position, where the central axis intersects the first and the second sensor parts, the sensor parts are configured to measure the largest deformation of the flexible membrane.

In one exemplary embodiment, the sensor carrier may be connected to the first inner surface of the flexible membrane and/or to the second inner surface of the inner wall. The sensor carrier may be connected to a part of the load cell and/or the load cell body that is substantially stationary relative to the deformation of the flexible membrane, allowing the sensor carrier and the sensor part arranged on the sensor carrier to be stationary relative to the sensor part that is arranged on the flexible membrane. This means that any movement of the sensor part on the flexible membrane along a direction that is parallel to the central axis creates a difference in the distance between the sensor part on the flexible membrane and the sensor part on the sensor carrier. The sensor carrier may be attached to the side wall using a connector, where the connector may be in the form of one or more connectors that are arranged around the periphery of the sensor carrier and are attached on the opposite side of the inner surface of the side wall or to the inner surface of the flexible membrane, in an area where the flexible membrane is configured to be relatively solid and provide minimal movement. Such an area may be close to the radial periphery of the flexible membrane, in an area which is close to where the flexible membrane attaches to the side wall of the load cell body.

In one exemplary embodiment, the sensor carrier may be connected to the base. The base may be a stationary part of the load cell or the load cell body, and by connecting the sensor carrier to the base, the sensor carrier may be fixed in a stationary position relative to the flexible membrane.

In one exemplary embodiment, the sensor carrier is connected to the base and/or the flexible membrane and/or the side wall via at least one connecting part. The sensor carrier may be attached to the side wall using a connector, where the connector may be in the form of one or more connectors that are arranged around the periphery of the sensor carrier and are attached on the opposite side to the inner surface of the side wall or to the inner surface of the flexible membrane, in an area where the flexible membrane is configured to be relatively solid and provide minimal movement. Such an area may be close to the radial periphery of the flexible membrane, in an area which is close to where the flexible membrane attaches to the side wall of the load cell body.

The connecting part may be in the form of a flexible clip, where movement of the rigid side wall and/or the flexible membrane is absorbed by the flexible clip, so that the movement is insulated from the movement of the side wall and/or the flexible membrane. Thus, it is possible to maintain the position of the sensor carrier if an eccentric force is applied to the load cell that may move or deform the side wall or the flexible membrane, and the sensor carrier is maintained in its position, thereby maintaining the position of the second sensor part.

The sensor carrier may be connected to the base using one or more pillars, where the pillars extend in a direction parallel to the central axis in a direction from the base towards the inner surface of the flexible membrane. Thus, the pillar may position the sensor carrier at a predefined distance from the flexible membrane and, hence, may also position the sensor part attached to the sensor carrier at a predefined distance from the sensor part attached to the flexible membrane, when the load cell is in its unloaded position.

In one exemplary embodiment, the flexible membrane has an annular shape and is attached to a first end of the first side wall, and/or wherein the flexible membrane comprises a load application part arranged in a central area of second outer surface of the flexible membrane. The flexible membrane may be attached to an annular side wall of the load cell and/or the load cell body, where the flexible membrane is capable of deforming in a direction parallel to the central axis so that the central area of the flexible membrane is configured move relative to the sensor carrier. The central area of the flexible membrane may further be provided with a load application part, where the load application part is intended to receive an external load, which is to be measured by the load cell. The load application part may be integral with the flexible membrane, where the flexible membrane and the load application part may be of a metal alloy.

The flexible membrane may be of a metal alloy, where the shape and thickness of the membrane may be configured to allow a certain deformation when a certain load is applied to the flexible membrane.

In one exemplary embodiment, the first sensor part, the second sensor part, the third sensor part and/or the fourth sensor part may have an annular, circular, round and/or cylindric shape (outer periphery and/or inner periphery). The sensor parts may be arranged so that the centre of the sensor part may intersect with the central axis, and that the outer periphery of the sensor part is at an equal distance along the periphery of the sensor part. The sensor part may be an unbroken circular part having a solid centre. The sensor part may be an annular ring part having an outer periphery and an inner periphery.

In one exemplary embodiment, the sensor carrier part is arranged to be stationary relative to the side wall and/or the base, relative to the flexible membrane. Thus, the flexible membrane deforms when a load is applied, the sensor carrier part maintains its position relative to the flexible membrane. Thus, when the flexible membrane deforms, the distance between the flexible membrane and the sensor carrier part may be changed, either to a shorter distance or a longer distance.

In one exemplary embodiment, the load cell is a capacitive load cell, and/or the first sensor part, the second sensor part or any subsequent sensor parts are capacitive sensors. A capacitive load cell may use a series of capacitors to measure weight across the load cell. Inside each capacitor are two charged metal plates, the first sensor part and the second sensor part with a dielectric material between them. A load placed on the capacitor pushes the plates closer together, increasing the capacitance of the capacitor according to the formula for capacitance of two parallel plates: C=εA/d. The capacitance of the capacitor is measured using the capacitance measuring circuit in the load cell. A measuring circuit for capacitance can be based on a number of different approaches such as, but not limited to, Oscillator Based Approach, where the capacitor is used to set the frequency of an oscillator and the frequency is measured to determine the capacitance, Charge Based Approaches, where a known charge is stored on the capacitor and the capacitance is determined based on the voltage across the capacitor given the relationship C=Q/V or Bridge Approach, where the imbalance in an AC bridge is used to measure the capacitance of a capacitor. The measured capacitance is then translated into the weight of the load applied to the load cell through the calibration system in the load cell. In one embodiment, the two charged metal plates may utilize air inside the load cell as a dielectric uncharged material. In another embodiment, the two charged metal plates may utilize other dielectric materials inside the load cell to reach the desired capacitance in the capacitors.

In one exemplary embodiment, the first sensor and the second sensor comprise a first sensor pair. Thus, the first sensor and the second sensor may operate as one capacitor, where the distance between the first and the second sensor results in a difference in the output voltage of the capacitor (sensor pair). The third and the fourth sensor parts may represent a second sensor pair (second capacitor).

In one embodiment, the load cell may comprise electronic circuitry to provide electrical charge to the sensor parts, and to measure the capacitance between at least two sensor parts, which will be represented by an electric signal output of the load cell, which represents the load applied to the load cell.

### Brief description of the drawings

The following is an explanation of exemplary embodiments with reference to the drawings, in which:
Fig. 1 is a perspective top view of a load cell in accordance with the present disclosure,
Fig. 2 is a schematic sectional view of a prior art load cell,
Fig. 3 is a schematic sectional view of an embodiment of a load cell in accordance with the present disclosure,
Fig. 4a and 4b are schematic sectional views of an embodiment of a load cell in accordance with the present disclosure,
Fig. 5 is a schematic sectional view of one embodiment of a load cell in accordance with the present disclosure, and
Fig. 6 is a schematic sectional view of one embodiment of a load cell in accordance with the present disclosure.

### Detailed description

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Fig. 1 shows a load cell 2, having a load cell body 1, where the load cell body 1 has a first end 22 comprising a load receiving part 3 (force application part 3) and a second end 24 having a base 17. The first end comprises a flexible membrane 19, which is connected to a first end 25 of a side wall 21, where a second end 27 of the side wall 21 is connected to a base 17 or may be in the form of a base 17. The load cell may have an electric connector 23, which allows a power input to be introduced into the load cell 2 and allows a power output to be received from the load cell.

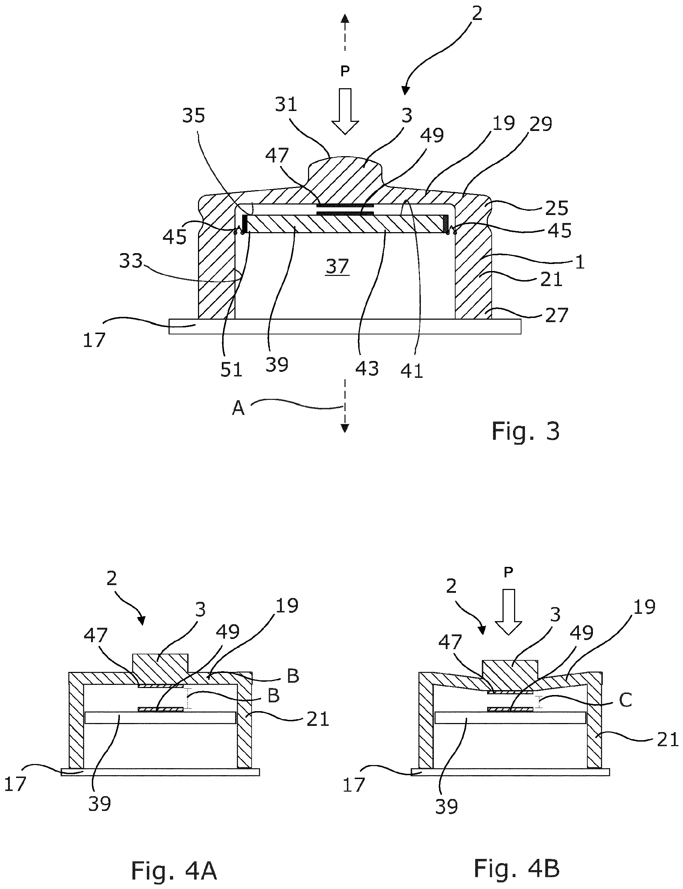

Fig. 3 shows a capacitive load cell 2, according to the present disclosure, having a load cell body 1, where the load cell body has a side wall 21 which extends annually along the load cell body 1. The side wall 21 has a first end 25 which is connected to a flexible membrane 19 (measuring membrane), and a second end 27 that is connected to a base 17. An outer part 29 is connected to the first end 25 of the side wall 21, and where a central part of the flexible membrane 19 comprises a force introduction part 3. The force introduction part 3 has a force receiving surface 31 which may be configured to receive a load connector (not shown) which may be connected to a device that needs to be weighed. The inner surface 33 of the side wall 21 and the inner surface 35 of the flexible membrane 19 define an inner volume 37 of the load cell body 1.

The load cell 2 may further comprise a sensor carrier 39, which is positioned inside the inner volume 37 of the load cell body, where the sensor carrier comprises a sensor surface 41 which faces the inner surface 35 of the flexible membrane 19, and an opposite second surface 43. The sensor carrier may be attached to the inner surface 33 of the side wall 21 via at least one connector 45, where the connector maintains the position of the sensor carrier 39 relative to the side wall 21 of the load cell body. The connector 45 may be in the form of a U-shaped spring 45 and is an example of a member for mounting the sensor carrier 39 in the load cell body 1 where two or more of these U-shaped springs may be soldered or bonded between the inner circumference (inner surface 33) of the load body and the circumference 51(outer periphery) of the sensor carrier 39. The load cell may comprise a first sensor part 47 arranged on the inner surface 35 of the flexible membrane 19 and a second sensor part 49 arranged opposite the first sensor part 47 on the sensor surface 41. The sensor carrier 39 is configured to secure the second sensor part 49 in the load cell 2 with a stable distance between the sensor parts when the load cell 2 is in an unloaded condition and maintaining the position of the second sensor part 49 when the first sensor part 47 moves along with the flexible membrane 19 in a loaded position. The at least one connector 45 is positioned on the inner surface of the side walls on the load cell body 1 while at the same time providing a certain flexibility in the radial directions between the sensor carrier and the load cell body 1.

The load cell 2 further comprises a first sensor part 47 arranged on the inner surface 35 of the flexible membrane and a second sensor part 49 arranged opposite the first sensor part 47 on the sensor surface 41. The first sensor part 47 and second sensor part 49 may be in the form of annular plates that are arranged to be opposite each other in a central area of the load cell body 1, where a central axis A intersects both the first sensor part 47 and the second sensor part 49.

With an axially applied load P, on the force introduction part 3, the membrane 19 will deflect in a direction parallel to the axis A, and the first sensor part 47 will move towards the second sensor part 49, which will show an increasing capacitance. The first sensor part 47 may be an electrode area, while the second sensor part may be a measuring electrode.

Because of the large change of distance between the first sensor part 47 and the second sensor part 49, even a measuring electrode with a comparatively small diameter will be sufficient to provide a stable signal.

An eccentrically applied load on the force introducing part 3 will tilt the stud and hereby the first sensor part 47, but because of the comparatively limited radius of the measuring electrode, the difference in distances from one side to the other of the electrode will be limited and hereby this unwanted change in capacity will be small.

Fig. 4A shows a schematic illustration of a load cell 2 in an unloaded condition, where there is no force being applied to the force application part 3, where the distance between the first sensor part 47 and the second sensor part 49 is predefined as B. Fig. 4B shows an illustrative example on what occurs when a force P is applied on the force application part 3, and the flexible membrane 19 deflects in the direction of the force application. When the force is applied, the loaded distance C between the first sensor part 47 and the second sensor part decreases and becomes smaller than the distance B shown in Fig. 4A. This occurs when the first sensor part 47 moves in the direction of the force, while the second sensor part maintains its position on the sensor carrier 39 and inside the load cell body 1. When the force is released from the force application part 3, the flexible membrane returns to its unloaded position, as shown in Fig. 4A. The difference in distance between the first sensor part 47 and the second sensor part 49 changes the capacitance between the two parts, which when converted to an electrical signal represents a voltage value of the distance between the two parts in accordance with the following formula: C=εA/d, as disclosed earlier in the present disclosure.

In one exemplary embodiment of the load cell according to the present disclosure, the second sensor part 49 may have a surface area which is shaped as a flat sphere or a very flat conus to provide the smallest possible change in the capacitance of first sensor part 47 and the second sensor part 49 (two sensors 47, 49) when the force introduction stud is tilted during eccentric application of force.

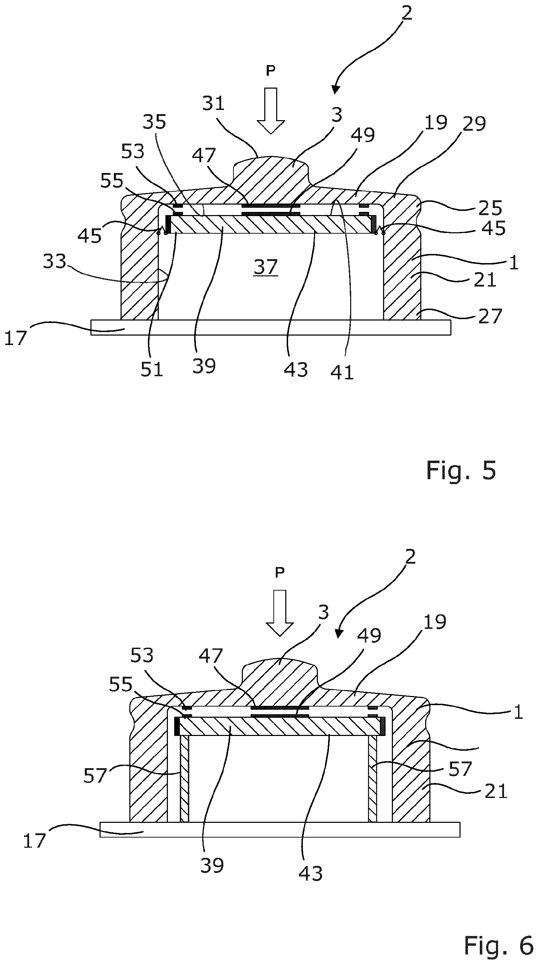

Fig. 5 shows a similar embodiment of a load cell 2 to what is shown in Fig. 3 with the difference that the load cell 2 is provided with a third sensor part 53 arranged on the inner wall of the flexible membrane 19 and a fourth sensor part 55 arranged on the sensor surface 41, where the third sensor part 53 and the fourth sensor part are arranged at a distance from the first sensor part 47 and second sensor part 49 in a radial direction towards the inner surface 33 of the side wall.

With an axially applied load P, on the force introduction part 3, the membrane 19 will deflect in a direction parallel to the axis A, and the area of the first sensor part 47 will see a movement towards the area of the second sensor part 49, which will show an increasing capacitance, while the third sensor part 53 will only see a very small positional change under load and therefore the capacitance of the fourth sensor part 55 will be substantially unchanged and may act as a reference to compensate for any shift in the position of the sensor carrier 39, with the areas of the second sensor part 49 and fourth sensor part 55, in relation to the areas of the first sensor part 47 and the third sensor part 53.

Fig. 6 shows another embodiment of a load cell 2 in accordance with the present disclosure, where the load cell is substantially similar to the load cell shown in Fig. 5 and/or Fig. 3, where the difference may be found in how the sensor carrier 39 is fixed relative to the load cell body 1. The sensor carrier 39 in this embodiment may be attached to the base 17 of the load cell 2 using two or more pillars 57, where the pillars extend from the base 17 and to a lower surface (second surface) 43 of the sensor carrier 39 and where the pillars maintain a fixed position of the sensor carrier relative to the flexible membrane 19, so that the first sensor part 47 and/or the third sensor part 53 may move relative to the sensor carrier 39 and the second sensor part 49 and/or the fourth sensor part 55. The movement of the flexible membrane 19 is identical to that shown and disclosed in relation to the embodiments shown in Fig. 3, 4A and 4B.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

## Claims

1. A load cell having a first load receiving end and a second opposing end, and having a central axis extending from the first load receiving end to the second opposing end, the load cell comprising:
- a first load receiving end comprising a flexible membrane that is adapted to yield upon application of a load to the membrane, the flexible membrane having a first inner surface and a first outer surface,
- a second opposing end comprising a base providing a counterforce to the load receiving end and/or the flexible membrane,
- at least one rigid side wall extending from the flexible membrane to the base, the side wall having a second inner surface and a second outer surface,
- a first inner volume defined by the first inner surface and the second inner surface,
- a sensor carrier being arranged at a predefined distance from the flexible membrane and having a first sensor surface facing the first inner surface of the flexible membrane, where the sensor carrier is connected to the first inner surface of the flexible membrane and/or to the second inner surface of the inner wall,
- a first sensor part arranged on the first inner surface of the flexible membrane,
- a second sensor part arranged on the first sensor surface of the sensor carrier,
- where in an unloaded condition the first sensor part is arranged at a first distance from the second sensor part, and in a loaded condition the first sensor part is arranged at a second distance from the second sensor part, where the first distance is different from the second distance,

2. A load cell in accordance with claim 1, wherein the load cell further comprises a third sensor part arranged on the first inner surface of the flexible membrane, and a fourth sensor part arranged on the first sensor surface of the sensor carrier.

3. A load cell in accordance with any of the preceding claims, wherein the first sensor part and the second sensor part are arranged in a central position of the load cell.

4. A load cell in accordance with any of the preceding claims, wherein the sensor carrier is connected to the base.

5. A load cell in accordance with any of the preceding claims, wherein the sensor carrier is connected to the base and/or the flexible membrane and/or the side wall via at least one connecting part.

6. A load cell in accordance with any of the preceding claims, wherein the flexible membrane has an annular shape and is attached to a first end of the first side wall, and/or wherein the flexible membrane comprises a load application part arranged in a central area of second outer surface of the flexible membrane.

7. A load cell in accordance with any of the preceding claims, wherein the first sensor part, the second sensor part, the third sensor part and/or the fourth sensor part have an annular, circular, round and/or cylindric shape.

8. A load cell in accordance with any of the preceding claims, wherein the sensor carrier part is arranged to be stationary relative to the side wall and/or the base, and/or relative to the flexible membrane.

9. A load cell in accordance with any of the preceding claims, wherein the load cell is a capacitive load cell and/or the first sensor part, the second sensor part, or any subsequent sensor parts are capacitive sensors.
